# EUROPEAN PATENT APPLICATION

(11) **EP 3 709 467 A1**
(43) Date of publication of application: **16.09.2020**
(21) Application number: 19162620.9
(22) Date of filing: 13.03.2019
(51) Int. Cl.: H02J 3/24, H02J 3/38, H02M 5/42, H02J 3/01, H02M 7/5395

(54) **REDUCTION OF SUBSYNCHRONOUS ACTIVE POWER OSCILLATIONS IN GRID FORMING PWM CONVERTERS FOR WIND TURBINE GENERATORS**

(71) Applicant: Siemens Gamesa Renewable Energy A/S, 7330 Brande (DK)
(72) Inventor: Knüppel, Thyge, Lenzie, G66 5NP (GB); Brogan, Paul Brian, Killearn, Glasgow, G63 9LG (GB); Elliott, Douglas, Glasgow, G73 2PY (GB)
(74) Representative: Aspacher, Karl-Georg

(57) **Abstract**

There is described a method of controlling a grid forming PWM converter for a wind turbine generator in order to reduce subsynchronous active power oscillations. The described method comprises (a) determining a first control voltage based on a power reference value and a voltage reference value (b) obtaining a feedback current, the feedback current being measured at an output of the grid forming PWM converter, (c) determining a control voltage correction value based on a filtering of the feedback current, (d) determining a second control voltage by adding the control voltage correction value to the first control voltage, and (e) supplying a converter reference voltage to the grid forming PWM converter, wherein the converter reference voltage is based on the second control voltage. Further, a device for controlling a grid forming PWM converter for a wind turbine generator in order to reduce subsynchronous active power oscillations, and a wind turbine comprising such a device are described.

## Description

### Field of Invention

The present invention relates to the field of wind turbine generators, in particular to a method of and a device for controlling a grid forming PWM converter for a wind turbine generator in order to reduce subsynchronous active power oscillations.

### Art Background

Grid forming or virtual synchronous machine network bridge converter control systems are based on the idea of having a more interactive relationship between the active and reactive power output of the converter and the AC grid dynamics in order to provide better support for the operation of the AC power system. This is in contrast to the converter control typically employed today, which is based on high bandwidth (e.g. 600rad/s) current control that has an excellent ability to reject disturbances in the AC power system and thereby pushing the delivery of the requested active or reactive power onto other equipment in the AC power system.

There are two principle ways of achieving this grid forming: with and without an embedded high bandwidth current controller. If the first is used, it is necessary to simulate or calculate what this "natural" exchange of active and reactive power is, how it changes in time, and which currents are required for realizing it. That is, simulate what response a low bandwidth voltage source would have and deliver that response with a high bandwidth current control. Alternatively, in the second case, the converter control is designed without an embedded current controller and is instead controlling the voltage amplitude and phase directly. The advantage is that the control does not have to predict behaviour but is simply responding to the voltage at its LV (low voltage) terminals in an inherent fashion, i.e. it delivers the current that the grid is asking for. In this situation, however, the converter does not have closed loop control over the current.

The current in an inductor is the integral of the voltage across it and if the three phase voltages applied on the output of the converter are not perfectly balanced, the phase currents will also not be the balanced. Perfectly balanced voltages only exist in a simulation environment but in a physical component there would be imperfections and nonlinearities coming in from control, timings, and hardware. In the absence of any direct control, imbalances may build up in the current on the LV side of the WTG transformer and if the imbalances are affecting one phase more than the other phases there will be a build-up of DC offsets to the current waveforms.

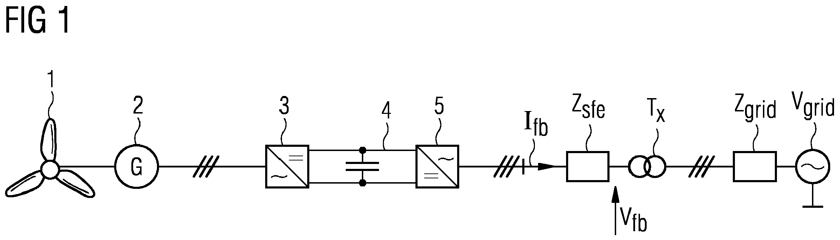

A typical electrical power train for a type 4 wind turbine is shown in Fig. 1. The wind turbine rotor 1 causes the generator 2 to produce electrical current which is supplied to a converter comprising a rectifier 3, DC link 4 and inverter 5. The converter output impedance is indicated as Zsfe. The converter output current (also referred to as feedback current) is Ifb and the converter output voltage (or feedback voltage) is Vfb. The converter output is connected to transformer Tx which in turn is connected to the power grid having impedance Zgrid and voltage Vgrid. Due to the vector group of the turbine transformer TX, DC offsets can build on the AC currents on the turbine side of the transformer Tx.

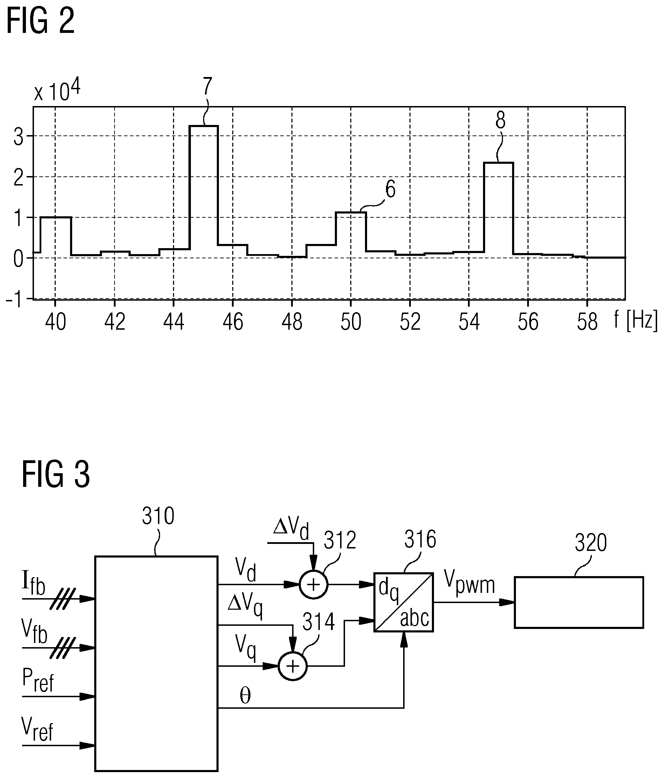

Fig. 2 shows the spectrum of the active power (magnitude) on the LV side for an applied grid voltage magnitude disturbance of 5Hz. As shown, in addition to the disturbance 6 at 50Hz, disturbances 7, 8 in active power are caused in the 5Hz side bands of 50Hz. These disturbances 7, 8 at 45Hz and 55Hz are caused by the presence of DC offsets in the LV side instantaneous waveforms.

Low frequency dynamics are naturally occurring in the power systems during normal operation and it is undesirable that such frequency disturbances give rise to disturbances in the side bands of 50Hz. It will cause a ripple in the DC link voltage and it will make it more difficult to design a controller that has satisfactory performance in the frequency band of interest.

The converter control mostly used today is based on high bandwidth current control that can effectively control the current to remove the offsets that create the subsynchronous oscillations discussed above. But for a grid forming converter control, where a key objective is to operate with a low bandwidth to make the terminal voltage of the converter look like a back EMF at say <5Hz, there may thus be a need for handling the damping or suppression at 50Hz in a different way.

### Summary of the Invention

This need may be met by the subject matter according to the independent claims. Advantageous embodiments of the present invention are described by the dependent claims.

According to a first aspect of the invention, there is provided a method of controlling a grid forming PWM converter for a wind turbine generator in order to reduce subsynchronous active power oscillations. The described method comprises (a) determining a first control voltage based on a power reference value and a voltage reference value (b) obtaining a feedback current, the feedback current being measured at an output of the grid forming PWM converter, (c) determining a control voltage correction value based on a filtering of the feedback current, (d) determining a second control voltage by adding the control voltage correction value to the first control voltage, and (e) supplying a converter reference voltage to the grid forming PWM converter, wherein the converter reference voltage is based on the second control voltage.

This aspect of the invention is based on the idea that a control voltage correction value obtained by filtering the feedback current (i.e. the converter output current) is added to the first control voltage to form a second control voltage which in turn forms the basis for the pulse width modulation performed by the grid forming PWM converter. By adding the control voltage correction value, subsynchronous oscillations in active power are reduced or even removed.

The first control voltage is determined in consideration of reference values for power and voltage (magnitude) to be supplied by the grid forming PWM converter. The control voltage correction value is determined by filtering the feedback current and added to the first control voltage in order to form a second (or modified) control voltage in which subsynchronous oscillations are positively dampened. By using this second control voltage as basis for the converter reference voltage that is supplied to the grid forming PWM converter, DC components in the feedback current and the resulting subsynchronous active power oscillations are removed or at least significantly reduced.

According to an embodiment of the invention, the filtering of the feedback current comprises band-pass filtering the feedback current.

By band-pass filtering the feedback current, information on oscillations within one or more selected frequency bands is obtained. This allows for effective reduction of particular oscillations.

According to a further embodiment of the invention, the band-pass filtering is centered at a grid frequency and/or comprises a bandwidth of 40 Hz or less, in particular 30 Hz or less, in particular 20 Hz or less, in particular 15 Hz or less, in particular 10 Hz or less, in particular 5 Hz or less.

The grid frequency is typically 50Hz or 60Hz. Thus, the band-pass filtering with a bandwidth of 20Hz will provide information on feedback current oscillations within a pass-band of 40-60Hz or 50-70Hz. In some cases, a narrower bandwidth, such as 15Hz or 10Hz may be employed.

According to a further embodiment of the invention, the method further comprises obtaining a feedback voltage, the feedback voltage being measured at the output of the grid forming PWM converter, wherein determining the control voltage correction value is further based on a filtering of the feedback voltage.

In this embodiment, the filtered feedback voltage (i.e. the measured LV voltage in a certain frequency range) is matched by the converter terminal voltage. Thereby, the impedance represented by the converter is effectively increased to infinity, such that the particular components of current are blocked from entering the converter. In other words, no additional damping as such is provided. Instead, the relevant current is blocked.

According to a further embodiment of the invention, the filtering of the feedback voltage comprises band-pass filtering the feedback voltage.

By band-pass filtering the feedback voltage, information on oscillations within one or more selected frequency bands is obtained. This allows for effective reduction of particular oscillations.

According to a further embodiment of the invention, the band-pass filtering is centered at a grid frequency and comprises a bandwidth of 20 Hz.

The grid frequency is typically 50Hz or 60Hz. Thus, the band-pass filtering will provide information on feedback voltage oscillations within a pass-band of 40-60Hz or 50-70Hz. In some cases, a narrower bandwidth, such as 15Hz or 10Hz may be employed.

According to a further embodiment of the invention, the feedback current comprises a set of dq feedback currents, the feedback voltage comprises a set of dq feedback voltages, the first control voltage comprises a first set of dq control voltages, the control voltage correction value comprises a set of dq control voltage correction values, and the second control voltage comprises a second set of dq control voltages.

In other words, the currents and voltages are advantageously represented as a pair of direct (d) and quadrature (q) values.

According to a second aspect of the invention, there is provided a device for controlling a grid forming PWM converter for a wind turbine generator in order to reduce subsynchronous active power oscillations. The device is adapted to (a) determine a first control voltage based on a power reference value and a voltage reference value, (b) obtain a feedback current, the feedback current being measured at an output of the grid forming PWM converter, (c) determine a control voltage correction value based on a filtering of the feedback current, (d) determine a second control voltage by adding the control voltage correction value to the first control voltage, and (e) supply a converter reference voltage to the grid forming PWM converter, wherein the converter reference voltage is based on the second control voltage.

This aspect is based on essentially the same idea as the first aspect discussed above.

According to a third aspect of the invention, there is provided a wind turbine comprising (a) a generator, (b) a grid forming PWM converter, and (c) a device according to the second aspect discussed above.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a block diagram of a wind turbine connected to a power grid.
Figure 2 shows a spectrum of active power at a converter output during a grid voltage disturbance.
Figure 3 shows a functional block diagram of a device according to an embodiment.
Figure 4 shows a block diagram of a current filtering device according to an embodiment.
Figure 5 shows a block diagram of a voltage filtering device according to an embodiment.

### Detailed Description

The illustration in the drawing is schematic. It is noted that in different figures, similar or identical elements are provided with the same reference numerals or with reference numerals which differ only within the first digit.

The illustrations in Figure 1 and Figure 2 have already been discussed above.

Figure 3 shows a functional block diagram of a device according to an embodiment. The device comprises a control unit 310, summing units 312, 314, and a dq to abc (three phases) conversion unit 316. The dq to abc conversion unit 316 is connected to a PWM unit 320 (which is part of the inverter 5 shown in Fig. 1). The control unit 310 is a low bandwidth control unit. Therefore, DC offsets in the current feedback, Ifb, which will appear in the dq system as 50Hz components, will not be suppressed effectively by the control.

The control unit 310 receives measured values of feedback current Ifb and feedback voltage Vfb and reference values for the power Pref and magnitude Vref of the voltage that is to be generated at the converter output. The feedback current Ifb and the feedback voltage Vfb are measured at the converter output (see Fig. 1). Based on these input values, the control unit 310 determines a first set of dq control voltages Vd, Vq and an angle θ.

The control voltage Vd is supplied to an input of summing unit 312, the control voltage Vq is supplied to an input of summing unit 314, and the angle θ is supplied to conversion unit 316.

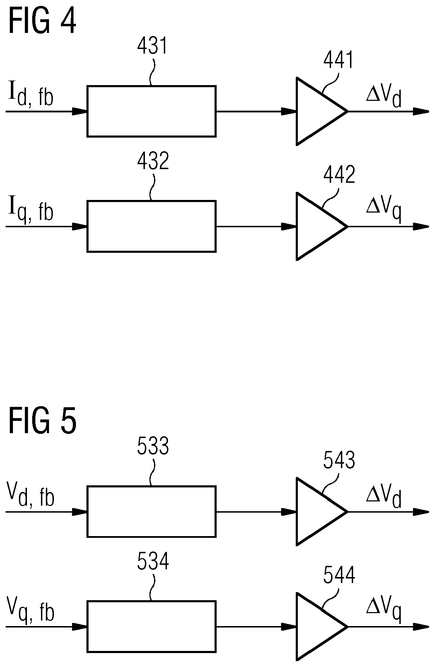

Furthermore, the control unit 310 determines a pair of dq control voltage correction values ΔVd, ΔVq based at least on a filtering of the feedback current Ifb, optionally also based on a filtering of the feedback voltage Vfb. This filtering is discussed in more detail below in conjunction with Figure 4 and Figure 5. The control voltage correction value ΔVd is supplied to another input of summing unit 312 and the control voltage correction value ΔVq is supplied to another input of summing unit 314.

The output from summing units 312, 314 is a second set of dq control voltages (or corrected set of dq control voltages) which is supplied to the conversion unit 316. Based on the second set of dq control voltages and the angle θ, the conversion unit 316 generates a converter reference voltage Vpwm which is supplied to PWM unit 320 and allows the inverter 5 to generate voltage waveforms for each of the three phases. Thereby, disturbances in form of subsynchronous active power oscillations (as shown in Fig. 2) are effectively suppressed.

Figure 4 shows a block diagram of a current filtering device according to an embodiment. More specifically, the current filtering device comprises a first current filter 431 configured to apply a band-pass filtering to the d-component Id,fb of the feedback current Ifb and a second current filter 432 configured to apply a band-pass filtering to the q-component Iq,fb of the feedback current Ifb. The filters 431, 432 may have one or more additional filters including at least one pass-band centered at the grid frequency (50Hz or 60Hz) and a bandwidth of e.g. 20Hz, 15Hz or 10Hz. The output of first filter 431 is connected to a first gain unit 441 applying a first gain factor K1 to the filtered d current. Similarly, the output of second filter 432 is connected to a second gain unit 442 applying a second gain factor K2 to the filtered q current. The outputs from the first and second gain units 441, 442 constitute the control voltage correction values ΔVd and ΔVq supplied to the summing units 312, 314 in Figure 3 as discussed above.

Summarizing the above discussion of Figure 3 and Figure 4, two additional components of dq voltage reference, i.e. ΔVd and ΔVq, are added to provide positive damping at and around the synchronous frequency. The delta components are calculated as shown in Figure 4. The filters are used for suppressing DC components of measured abc currents and for targeting the frequency range where the control is operating, e.g. a band-pass filter, whereas the gain K1, K2 is dictating the amount of damping added. The structure in Figure 4 is equivalent to having an increased resistance in the converter line reactor for the frequency range being targeted by the filtering. The effect is therefore to increase the attenuation of components of active power around synchronous frequency.

It is noted that instead of using the measured feedback currents, the feedback current could be calculated using measured voltage Vfb, PWM reference, and knowledge of the line reactor, Zsfe.

The described control device provides a way of controlling and damping 50Hz components in active power that are due to occur as a result of direct voltage control, i.e. no high bandwidth current control, without requiring a high bandwidth of the main control functions, which would counter the objective of making the converter appear as a low bandwidth voltage source behind an impedance.

The control can be combined with a slowly acting (<5Hz) voltage offset controller that is adding an offset to the phases of the V_PWM as a function of the steady state DC components to the measured Iabc.

Extending the frequency range where the damping control is applied, or paralleling additional voltage correction values ΔVd and ΔVq, allows the control to add an amount of damping at frequencies where the grid is having weakly damped resonances.

Figure 5 shows a block diagram of a voltage filtering device according to an embodiment. More specifically, the voltage filtering device comprises a first voltage filter 533 configured to apply a band-pass filtering to the d-component Vd,fb of the feedback voltage Vfb and a second voltage filter 534 configured to apply a band-pass filtering to the q-component Vq,fb of the feedback voltage Vfb. The filters 533, 534 may have one or more filters including at least one pass-band centered at the grid frequency (50Hz or 60Hz) and a bandwidth of e.g. 20Hz, 15Hz or 10Hz. The output of first voltage filter 533 is connected to a third gain unit 543 applying a third gain factor K3 to the filtered d voltage. Similarly, the output of second voltage filter 534 is connected to a fourth gain unit 544 applying a fourth gain factor K4 to the filtered q voltage. The outputs from the third and fourth gain units 543, 544 are respectively added to the outputs from the first and second gain units 441, 442 to constitute the control voltage correction values ΔVd and ΔVq supplied to the summing units 312, 314 in Figure 3 as discussed above.

By applying the filtering shown in Figure 5, the measured LV voltage in a certain frequency range is matched by the converter terminal voltage. This effectively increases the impedance represented by the converter to infinity and thereby blocks the particular components of current from entering the converter. However, this does not as such provide any additional damping but rather prevents the currents from occurring in the first place.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A method of controlling a grid forming PWM converter for a wind turbine generator in order to reduce subsynchronous active power oscillations, the method comprising
determining a first control voltage based on a power reference value (Pref) and a voltage reference value (Vref),
obtaining a feedback current (Ifb), the feedback current being measured at an output of the grid forming PWM converter,
determining a control voltage correction value based on a filtering of the feedback current,
determining a second control voltage by adding the control voltage correction value to the first control voltage, and
supplying a converter reference voltage (Vpwm) to the grid forming PWM converter, wherein the converter reference voltage is based on the second control voltage.

2. The method according to the preceding claim, wherein the filtering of the feedback current comprises band-pass filtering the feedback current.

3. The method according to the preceding claim, wherein the band-pass filtering is centered at a grid frequency.

4. The method according to the preceding claim, wherein the band-pass filtering comprises a bandwidth of 40 Hz or less.

5. The method according to any of the preceding claims, further comprising
obtaining a feedback voltage, the feedback voltage being measured at the output of the grid forming PWM converter,
wherein determining the control voltage correction value is further based on a filtering of the feedback voltage.

6. The method according to the preceding claim, wherein the filtering of the feedback voltage comprises band-pass filtering the feedback voltage.

7. The method according to the preceding claim, wherein the band-pass filtering is centered at a grid frequency and comprises a bandwidth of 20 Hz.

8. The method according to any of the preceding claims, wherein
the feedback current comprises a set of dq feedback currents (Id,fb, Iq,fb),
the feedback voltage comprises a set of dq feedback voltages (Vd,fb, Vq,fb),
the first control voltage comprises a first set of dq control voltages (Vd, Vq),
the control voltage correction value comprises a set of dq control voltage correction values (ΔVd, ΔVq), and
the second control voltage comprises a second set of dq control voltages.

9. A device for controlling a grid forming PWM converter for a wind turbine generator in order to reduce subsynchronous active power oscillations, the device being adapted to
determine a first control voltage based on a power reference value (Pref) and a voltage reference value (Vref),
obtain a feedback current (Ifb), the feedback current being measured at an output of the grid forming PWM converter,
determine a control voltage correction value based on a filtering of the feedback current,
determine a second control voltage by adding the control voltage correction value to the first control voltage, and
supply a converter reference voltage (Vpwm) to the grid forming PWM converter, wherein the converter reference voltage is based on the second control voltage.

10. A wind turbine comprising a generator, a grid forming PWM converter, and a device according to the preceding claim.
